(19) Europäisches Patentamt
European Patent Office
Office européen des brevets

(11) **EP 4 323 923 B1**

(12) **EUROPEAN PATENT SPECIFICATION**

(45) Date of publication and mention
of the grant of the patent:
**12.02.2025 Bulletin 2025/07**

(21) Application number: **22724651.9**

(22) Date of filing: **16.04.2022**

(51) International Patent Classification (IPC):
**G06N 3/049** $^{(2023.01)}$     **G06N 3/065** $^{(2023.01)}$

(52) Cooperative Patent Classification (CPC):
**G06N 3/049; G06N 3/065**

(86) International application number:
**PCT/EP2022/060197**

(87) International publication number:
**WO 2022/219195 (20.10.2022 Gazette 2022/42)**

(54) **HIERARCHICAL RECONFIGURABLE MULTI-SEGMENT SPIKING NEURAL NETWORK**

HIERARCHISCHES REKONFIGURIERBARES NEURONALES
MEHRSEGMENT-SPIKING-NETZWERK

RÉSEAU NEURONAL IMPULSIONNEL MULTI-SEGMENTS RECONFIGURABLE HIÉRARCHIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2021   US 202163175570 P**

(43) Date of publication of application:
**21.02.2024   Bulletin 2024/08**

(73) Proprietor: **Innatera Nanosystems B.V.
2289 EX Rijswijk (NL)**

(72) Inventors:
• **ZJAJO, Amir
2289 EX RIJSWIJK (NL)**
• **KUMAR, Sumeet Susheel
2289 EX RIJSWIJK (NL)**

(74) Representative: **Hoyng Rokh Monegier B.V.
Rembrandt Tower, 30th Floor
Amstelplein 1
1096 HA Amsterdam (NL)**

(56) References cited:
**WO-A2-2020/099680     US-A1- 2012 317 062
US-A1- 2019 303 740**

## Description

TECHNICAL FIELD

The present invention relates to automatic signal recognition techniques, and more particularly, to a system and method for a hierarchical, reconfigurable multi-segment network of spiking neurons.

BACKGROUND

Deep neural networks (DNNs) form the basis for a large number of machine learning applications; starting with speech and image recognition, the number of applications that utilize DNNs has increased exponentially. Initially, hardware (deep-network) accelerators have been implemented on standard synchronous digital logic. The high level of parallelism of neural networks is not replicated in the (typically) serial and time-multiplexed processing in digital systems; conversely, computational primitives of hardware DNN emulator realized as analog computing nodes, where memory and processing elements are co-localized, offer significant improvements in terms of speed, size, and power consumption.

In biological neural network models each individual neuron communicates asynchronously and through sparse events, or spikes. In such event-based spiking neural network (SNN) only neurons who change the state generate spikes and may trigger signal processing in subsequent layers, consequently, saving computational resources. In particular, SNNs incorporate asynchronous distributed architectures that process sparse binary time series by means of local spike-driven computations, local or global feedback, and online learning. In analogy with biological neural processing systems, mixed-signal based SNN processors preserve two of their fundamental characteristics: the explicit representation of time and the explicit use of space, instantiating dedicated physical circuits for each neuron/synapse element.

In essence, such SNN implementations adopt a hybrid analog-digital signal representation, i.e. the trains of pulses/spikes transmit analog information in the timing of the events, which are converted back into analog signals in the dendrites (inputs) of the neuron. Information is encoded by patterns of activity occurring over populations of neurons, and the synapses (a connection to the subsequent neurons) can adapt their function depending on the pulses they receive, providing signal transmission energy-efficiency, and flexibility to store and recall information. SNNs can be directly applied to pattern recognition and sensor data fusion, relying on the principle that amplitude-domain, time-domain, and frequency domain features can be encoded into unique spatial- and temporal-coded spike sequences. The generation of these sequences relies on the use of one or more segments of spiking neurons.

The presently known methods for mapping SNNs onto a hardware substrate do not allow for great flexibility regarding e.g. the number of neurons used for a particular function within the SNN, the connectivity via the synapses, and the configuration of these neurons and synapses.

Furthermore, although the elementary operations required by an SNN are very efficiently realized by analog electronic circuitry, fabrication mismatch induces distortions in their functional properties. See M.J.M. Pelgrom, A.C.J. Duinmaijer, A.P.G. Welbers, "Matching properties of MOS transistors," IEEE Journal of Solid-State Circuits, vol. 24, no. 5, pp. 1433-1439, 1989. Especially at smaller process geometries, and lower operating currents, these circuits are increasingly susceptible to quantum effects and external noise, which effectively reduces signal-to-noise ratio and limits processing performance. See K.L. Shepard, V. Narayanan, "Noise in deep submicron digital design," IEEE International Conference on Computer-Aided Design, pp.524-531, 1997.

The impact of these non-idealities is increased in the case of large arrays where the driver, biasing, and neurons and synapse are shared by a greater number of devices, over longer interconnects.

Document WO 2020/099680 A2 discloses a spiking neural network for classifying input signals. The spiking neural network comprises a plurality of spiking neurons, and a plurality of synaptic elements interconnecting the spiking neurons to form the network. Each synaptic element is adapted to receive a synaptic input signal and apply a weight to the synaptic input signal to generate a synaptic output signal, the synaptic elements being configurable to adjust the weight applied by each synaptic element. Furthermore, each of the spiking neurons is adapted to receive one or more of the synaptic output signals from one or more of the synaptic elements, and generate a spatio-temporal spike train output signal in response to the received one or more synaptic output signals. The spiking neural network is partitioned into multiple sub-networks, wherein each sub-network comprises a sub-set of the spiking neurons connected to receive synaptic output signals from a sub-set of the synaptic elements. The sub-network is adapted to generate a sub-network output pattern signal in response to a sub-network input pattern signal applied to the sub-network. Furthermore, each sub-network forms part of one or multiple cores in an array of cores, each core consisting of a programmable network of spiking neurons implemented in hardware or a combination of hardware and software. Communication between cores in the core array is arranged through a programmable interconnect structure.

Document US 2012/317062 A1 discloses reconfigurable neural network circuit which comprises an electronic synapse array including multiple synapses interconnecting a plurality of digital electronic neurons. Each neuron comprises an integrator that integrates input spikes and generates a signal when the integrated inputs exceed a threshold. The circuit further comprises a control module for reconfiguring the synapse array. The control module comprises a global final state machine that controls timing for operation of the circuit, and a priority encoder that allows spiking neurons to sequentially access the synapse array.

Document US 2019/303740 A1 discloses a neurosynaptic core which is adapted to apply a plurality of synaptic weights to a plurality of input activations to produce a plurality of output activations. Synaptic weights for one of a plurality of logical cores are read. The neurosynaptic core is configured to implement the one of the plurality of logical cores using the synaptic weights. At least one data block is provided as contiguous input activations to the neurosynaptic core. The input activations are processed by the neurosynaptic core to determine at least one contiguous block of output activations.

SUMMARY

The neuro-synaptic segment disclosed in the present invention is organized as repeating arrays of synaptic circuits and neuron units. The present invention encompasses modalities of how these arrays are partitioned and mapped to segments, and we describe the methods and mechanisms on which the neurosynaptic array and accompanying connections can be reconfigured and segmented, subsequently offering greater flexibility in mapping SNNs onto hardware substrate. The mapping methodology incorporates a constraint driven partitioning and mapping of segments (in terms of the size of each segment (the number of neurons), their connectivity (topology and number of synapses), and their configuration (weights and number of layers)), where the chosen definition and bounded constraint is a performance metric linked with the designated function of the network of segments. This approach, detailed in the remainder of this disclosure, results in an effective means for realizing large networks of spiking neurons capable of pattern recognition of complex sensory signals.

The invention is defined by the appended set of claims.

According to a first aspect of the disclosure, a neurosynaptic array comprising a plurality of spiking neurons, and a plurality of synaptic elements interconnecting the spiking neurons to form a spiking neural network at least partly implemented in hardware is disclosed. Each synaptic element is arranged to receive a synaptic input signal from at least one of a multiple of inputs and is adapted to apply a weight to the synaptic input signal to generate a synaptic output signal, the synaptic elements being configurable to adjust the weight applied by each synaptic element. Furthermore, each of the spiking neurons is arranged to receive one or more of the synaptic output signals from one or more of the synaptic elements, and is adapted to generate a spatio-temporal spike train output signal in response to the received one or more synaptic output signals.

The neurosynaptic array comprises weight blocks and output blocks, each weight block comprising one or more of the synaptic elements, and each output block comprising one or more of the neurons and a neuron switching circuit. Each output block is electrically connectable to a subset of weight blocks via the neuron switching circuit and wherein the neuron switching circuit is configured to selectively electrically connect at least one synaptic element comprised within the subset of weight blocks to at least one neuron comprised within the respective output block, to obtain a partitioning of the neurosynaptic array into sets of neurons electrically connected to selected synaptic elements.

According to an embodiment of the first aspect of the disclosure, the subset of weight blocks to which an output block is electrically connected forms one or multiple columns within the array of synaptic elements and/or wherein the synaptic elements comprised in a particular weight block are provided within the same row of the neurosynaptic array and/or wherein each output block is connected to a column of weight blocks.

According to an embodiment of the first aspect of the disclosure, each of the neuron switching circuits comprises switching signal paths which comprise conducting wires implemented in a logic circuit of the neuron switching circuit, wherein the switching signal paths are configured to be switchable between different configurations, preferably by using transistor gates, wherein each configuration determines which at least one synaptic element comprised within the subset of weight blocks is electrically connected to which at least one neuron comprised within the output block.

According to an embodiment of the first aspect of the disclosure, the neuron switching circuit is configured to reconfigure the switching signal paths dynamically, preferably wherein the dynamic reconfiguration is based on a mapping methodology incorporating a constraint driven partitioning and segmentation of the neurosynaptic array, preferably wherein the segmentation is based on matching of the weight block and output block size to an input signal-to-noise ratio.

According to an embodiment of the first aspect of the disclosure, the segmentation of the neurosynaptic array is performed based on one or more learning rules, learning rates and/or (post-)plasticity mechanisms such that at least two of the neurosynaptic subarrays are distinct in terms of on the one or more learning rules, learning rates and/or (post-)plasticity mechanisms.

According to an embodiment of the first aspect of the disclosure, at least one of the weight blocks is organized as an interleaved structure, such as to facilitate the switching and/or combining of synaptic elements within the neurosynaptic array, and/or wherein for each output block the switching is independently controllable, such as to obtain a higher mapping flexibility, and/or wherein at least one of the output blocks are organized as an interleaved structure and/or wherein the neuron output of any of the output blocks is broadcasted to one or multiple neurosynaptic subarrays.

According to an embodiment of the first aspect of the disclosure, each of the neurons within one of the output blocks conducts passively as graded analog changes in electrical potential.

According to an embodiment of the first aspect of the disclosure, the neurosynaptic array is segmented into neurosynaptic subarrays which are separable and have their own requisite circuity, and/or are arranged to process, and be optimized for, a single modality.

According to an embodiment of the first aspect of the disclosure, both long-range and short-range interconnections exist between neurons of different neurosynaptic subarrays, and wherein denser connectivity exists in between proximal neurosynaptic subarrays than between more distant neurosynaptic subarrays.

According to an embodiment of the first aspect of the disclosure, at least one of the output blocks is controllable in that the accumulation period and/or the integration constant of a particular neuron within the at least one of the output blocks is controllable via control signals.

According to an embodiment of the first aspect of the disclosure, a neuron membrane potential of one of the neurons is implemented in the analog domain as a voltage across a capacitor or as a multibit variable stored in digital latches; or in the digital domain using CMOS logic circuits.

According to a second aspect of the present disclosure, a spiking neural processor is disclosed. The spiking neural processor comprises a data-to-spike encoder that encodes digital or analog data into spikes, a neurosynaptic array according to the first aspect of the disclosure, arranged to take the spikes outputted by the data-to spike encoder as input and arranged to output a spatio-temporal spike train as a result of the input, and a spike decoder arranged to decode the spatio-temporal spike trains originating from the neurosynaptic array.

According to a third aspect of the present disclosure, a method for configuring a neurosynaptic array is disclosed. The neurosynaptic array comprises a plurality of spiking neurons, and a plurality of synaptic elements interconnecting the spiking neurons to form the network at least partly implemented in hardware. Each synaptic element is adapted to receive a synaptic input signal from at least one of a multiple of inputs and apply a weight to the synaptic input signal to generate a synaptic output signal, the synaptic elements being configurable to adjust the weight applied by each synaptic element. Furthermore, each of the spiking neurons is adapted to receive one or more of the synaptic output signals from one or more of the synaptic elements, and generate a spatio-temporal spike train output signal in response to the received one or more synaptic output signals.

The method comprises dividing the neurosynaptic array into weight blocks and output blocks, each weight block comprising one or more of the synaptic elements, and each output block comprising one or more of the neurons and a neuron switching circuit, making each output block electrically connectable to a subset of weight blocks via the neuron switching circuit, and configuring the neuron switching circuit to selectively electrically connect at least one synaptic element comprised within the subset of weight blocks to at least one neuron comprised within the respective output block, to obtain a partitioning of the neurosynaptic array into sets of neurons electrically connected to selected synaptic elements.

According to an embodiment of the third aspect of the disclosure, the subset of weight blocks to which an output block is electrically connected forms one or more multiple columns within the array of synaptic elements and/or wherein the synaptic elements comprised in a particular weight block are provided within the same row of the neurosynaptic array.

According to an embodiment of the third aspect of the disclosure, each of the neuron switching circuits comprises switching signal paths which comprise conducting wires implemented in a logic circuit of the neuron switching circuit, wherein the switching signal paths are configured to be switchable between different configurations, preferably by using transistor gates, wherein each configuration determines which at least one synaptic element comprised within the subset of weight blocks is electrically connected to which at least one neuron comprised within the output block.

## BRIEF DESCRIPTION OF DRAWINGS

Embodiments will now be described, by way of example only, with reference to the accompanying schematic drawings in which corresponding reference symbols indicate corresponding parts, and in which:

FIG. 1 shows a schematic representation of a square neurosynaptic array with $n^2$ synapses;

FIGS. 2A-C show schematic representations of organization of the reconfigurable neurosynaptic array: in FIG. 2A the primary organizational units are weight blocks $W_{i,j}$ and output blocks $O_j$ that collect $m$ weights and $m$ neurons, respectively, in FIG. 2B the structure of weight block $W_{i,j}$ is shown, in FIG. 2C the structure of an output block $O_j$ is shown;

FIG. 2D shows an exemplary embodiment of possible configurations of a neuron switching circuit in a column/neuron decoder;

FIG. 3 schematically shows how to divide an exemplary reconfigurable array (as e.g. shown in FIG. 2) into multiple segments/subarrays;

FIGS. 4A-D schematically show an exemplary organization of the reconfigurable neuro-synaptic array: in FIG. 4A $n^2$ synapses and $n$ neurons, in FIG. 4B dividing the array in FIG. 4A into two segments, each with $n^2/2$ synapses and $2 \times n$ neurons, in FIG. 4C dividing an array into four segments, each with $n^2/4$

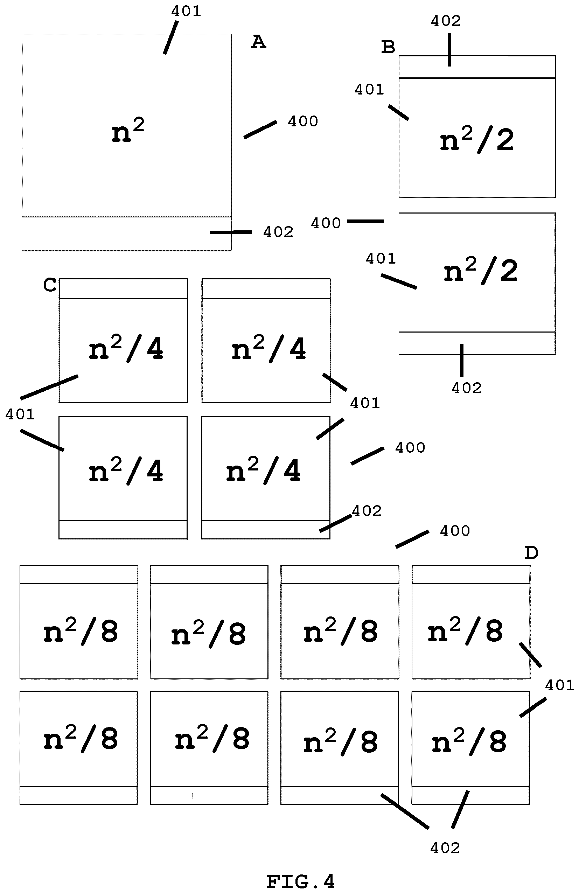

synapses and $4 \times n$ neurons, and in FIG. 4D dividing an array into eight segments, each with $n^2/8$ synapses and $8 \times n$ neurons;

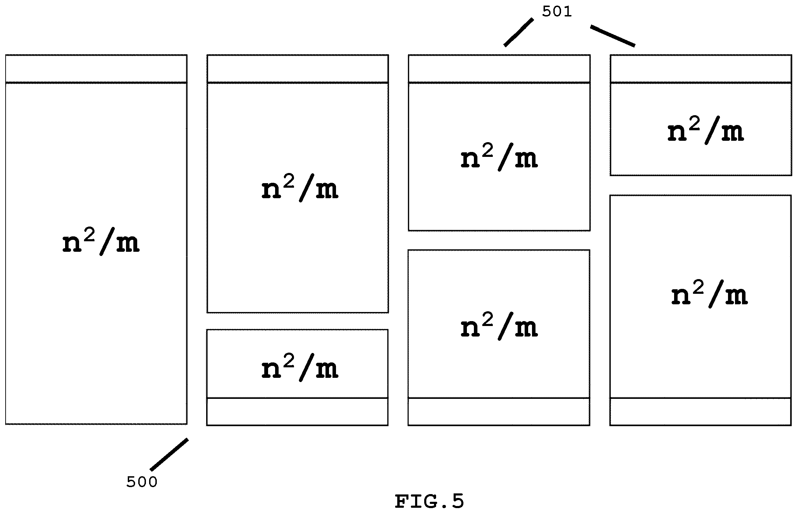

FIG. 5 shows an exemplary representation of an organization of the reconfigurable neuro-synaptic array: each of the segments (subarrays) can have a different synaptic count per neuron;

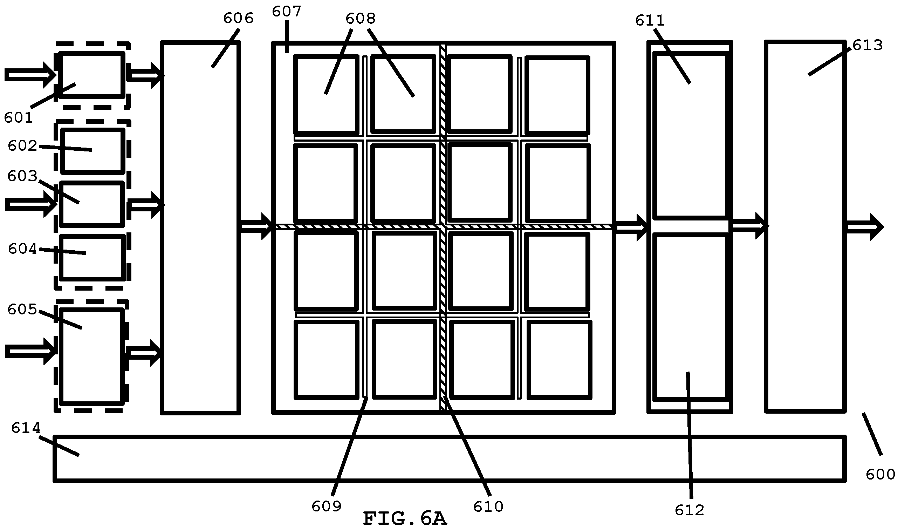

FIG. 6A show an exemplary representation of a spiking neural processor incorporating data-to-spike encoders, multi-segmented analog/mixed-signal neurosynaptic array, and spike decoders;

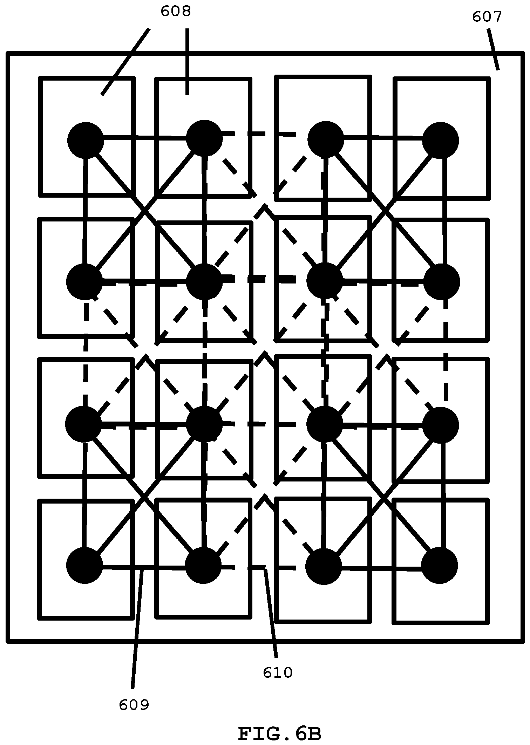

FIG. 6B shows an exemplary representation of an interconnect structure.

The figures are meant for illustrative purposes only, and do not serve as restriction of the scope or the protection as laid down by the claims.

DESCRIPTION OF EMBODIMENTS

Hereinafter, certain embodiments will be described in further detail. It should be appreciated, however, that these embodiments may not be construed as limiting the scope of protection for the present disclosure.

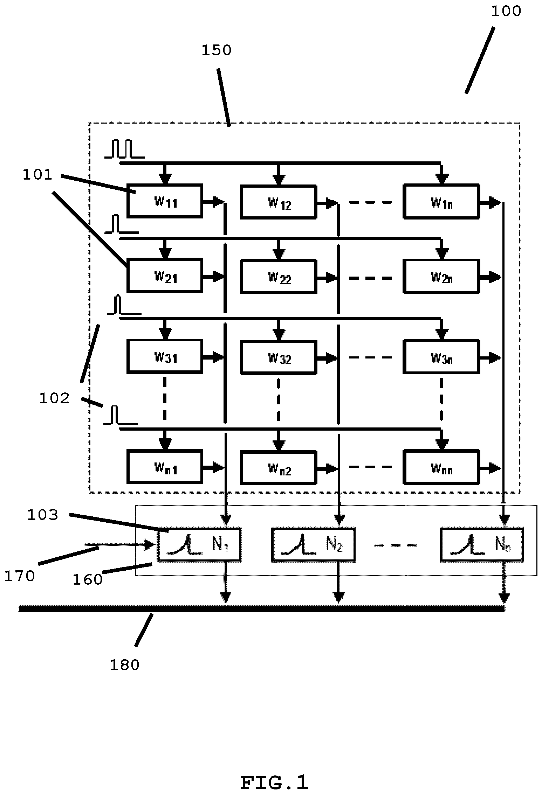

FIG. 1 shows a schematic representation of a square neurosynaptic array 100 with $n^2$ synapses and $n$ neurons. The neurosynaptic array 100 comprises a synapse matrix 150 with synapses 101 and a neuron row 160 with neurons 103. The synapses and neurons can be partly of fully implemented in hardware.

Each of the synapses 101 in the synapse matrix 150 has a certain weight $w_{i,j}$ attributed to it, where $i$ denotes the ith row of the synapse matrix 150, and $j$ denotes the $j$th column of the synapse matrix 150. Each row of the synapse matrix 150 is driven by a respective input 102. The input 102 is an electrical signal and can be e.g. a voltage or current spike(train). Each column $j$ of the synapse matrix 150 drives a respective output neuron 103 denoted $N_j$.

Each of the weights $w_{i,j}$ denote the strength or amplitude of the connection between the respective input 102 to the ith row of the synapse matrix 150 and the neuron $N_j$ connected to the $j$th column of the synapse matrix 150. In other words, if the weight $w_{i,j}$ increases, the connection is strengthened between the respective input 102 to the ith row and the neuron $N_j$ connected to the $j$th column of the synapse matrix 150.

When the membrane potential of a particular neuron $N_j$, which is related to the neuron's membrane electrical charge, reaches a specific value (called the 'threshold') the neuron fires. This electrical signal is represented either as a voltage or current spike and is send to another part of the SNN via a spike out line 180.

The neuron row 160 can be controlled in that e.g. the accumulation period and/or the integration constant of a particular neuron(s) 103 can be controlled via control signals 170 (although only one control signals 170 is shown, there may be one or more separate control signals for each neuron). In this way, the reaction of the neurons 103 to the signals from the synapse matrix 150 can be controlled.

This square neurosynaptic array is an example of a spiking neural network hardware such as the one described in US 63/107,498, which utilizes configurable arrays of spiking neurons, synapses, connected using a programmable interconnect structure that facilitates the implementation of any arbitrary connection topology. There, an efficient neurosynaptic array was described using distributed components that is composed of $n$ inputs driving $n^2$ synapses and $n$ neurons, i.e. the system incorporates the presence of electronic synapses at the junctions of the array, while the periphery of the array includes rows of the neuron circuits, which mimic the action of the soma and axon hillock of biological neurons.

Such an array can be partitioned and mapped onto an array of segments, each of which contains a programmable network of spiking neurons.

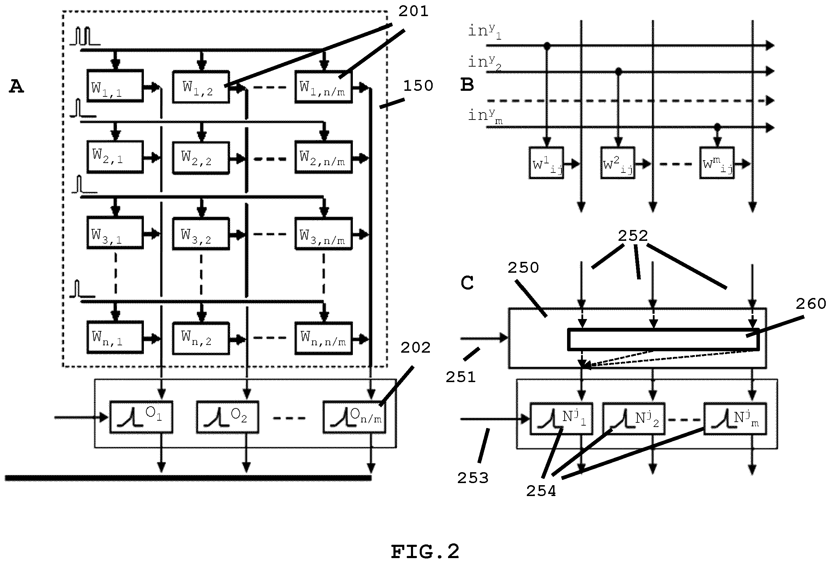

FIGS. 2A-C show schematic representations of organization of the reconfigurable neurosynaptic array comprising $n^2$ synaptic elements and $n$ neurons. In FIG. 2A the primary organizational units are weight blocks 201 and output blocks 202 that collect $1 \times m$ synaptic elements and $m$ neurons, respectively.

Fig. 2B shows a single weight block 201 with input lines. To support a larger fan-in, the synaptic outputs of multiple synaptic elements spread over multiple synapse columns can be directed into a single neuron, effectively increasing the potential fan-in of a neuron to $n \times m$ unique inputs. This is achieved by collecting synapses into weight blocks. The organization of the reconfigurable neurosynaptic array describes a space of possible architectures controlled by the number $m$ of synaptic elements within a weight block, with $m \in [1, n]$, where maximum fan-in to a neuron is $n \times m$, number of input ports is $n \times m$, and number of neurons broadcast to via a single input spike is $n/m$. Increasing the number of $W_{n,n/m}$ weight blocks provides higher synapse utilization when an input is not shared among all mapped neurons.

The number of synapse columns (columns of synaptic elements) in a weight block 201 is thus equal to $m$ as shown in Fig. 2B, and $n/m$ is the total number of weight blocks 201 in each row of the neurosynaptic array 150, with $n$ the total number of columns in the synapse matrix 150 (assuming a square array). A weight block can comprise multiple rows of synaptic elements as well as multiple columns of synaptic elements, however the number of rows in each weight block 201 is 1 in this example. Each weight block is indicated as $W_{ij}$ with $i \in [1, n]$ and $j \in [1, n/m]$.

Note that although Fig. 2A depicts a single input line for each row of weight blocks 201 for simplicity, each row of weight blocks 201 actually receives multiple inputs, e.g. a weight block 201 comprising $m$ synaptic elements may have $m$ inputs as shown in Fig. 2B, so that the weight blocks 201 in each row are connected to $m$ input lines. Similarly, Fig. 2A depicts a single line for transmitting the outputs of each column of weight blocks 201 for simplicity. However, each column of weight blocks 201 actually generates multiple outputs, e.g. a weight block 201 comprising $m$ synaptic elements may generate $m$ outputs as shown in Fig. 2B, so that the weight blocks 201 in each column are connected to $m$ output lines.

Fig. 2C shows a single output block 202. The number of neurons in each output block 202 driven by a column of the weight blocks 201 is $m$. Each output block is indicated as $O_i$ with $i \in [1, n/m]$.

The square reconfigurable neurosynaptic array can thus be divided into $n/m$ output blocks of size $m$, where $m \leq n$. A separable neurosynaptic array is thus formed that has $n$ unique input ports and $n/m$ output blocks comprising $m$ neurons.

The total number of unique inputs is thereby increased and may be used either to increase the fan-in to individual neurons and/or in order to provide more granularity in spike distribution. Feedback connections are gracefully scaled with the array for efficient mapping of recurrent and multi-layer networks. The number of weight blocks $n/m$ per row thus designates internal partitioning of the $n^2$ neurosynaptic array; collectively, the number of unique inputs is increased to $n \times m$. If $m = n$, each synapse has its own dedicated input port, while for $m = 1$, the original $n^2$ array is obtained, hence an input is shared across all neurons.

In FIG. 2B the structure of a single weight block $w_{i,j}$ is represented for the organization of the reconfigurable neurosynaptic array.

Each of $W_{n,n/m}$ weight blocks follow the array organization, i.e. a set of $m$ inputs, denoted $in^i$ with $i \in [1, n]$, is broadcast along a row of weight blocks, that is a single input $in_x^i$ with $x \in [1, m]$ is distributed to $n/m$ neurons directly.

The $x$th synaptic element (with $x \in [1, m]$) of weight block $w_{i,j}$ (with $i \in [1, n]$ and $j \in [1, n/m]$)is denoted as $w_{i,j}^x$. A set of $m$ inputs, denoted $in^i$ with $i \in [1, n]$, is broadcast along the ith row of synaptic elements; that is, a single input $in_x^i$ with $x \in [1, m]$ in the set of $m$ inputs is distributed to $n/m$ neurons.

In FIG. 2C the structure of an output block $O_j$ is shown for the organization of the reconfigurable neurosynaptic array.

A column of weight blocks 201 comprises multiple synapse columns connectable to an output block 202 and passes the outputs 252 from the synapse columns into a column/neuron decoder 250. The column/neuron decoder 250 includes a switching circuit 260 for connecting the synapse column outputs 252 to one or more sets of neurons 254 of the output block 202, the switching circuit 260 controlled by one or more select signals 251. The switched signal that comes out of the column/neuron decoder 250 has been switched to one or more neurons 254 denoted by $N_x^j$ with $x \in [1, m]$ for the output block $O_j$ with $j \in [1, n/m]$, enabling connection of the synapse column outputs 252 to different combinations of neurons or sets of neurons.

The select signal 251 may be used to select how the column/neuron decoder 250 switches the synapse column outputs 252 from one set of neurons 254 to another set of neurons 254 of the output block 202. One or more neuron control signals 253 may be used to determine the operating properties of the neuron sets 254, or of individual neurons.

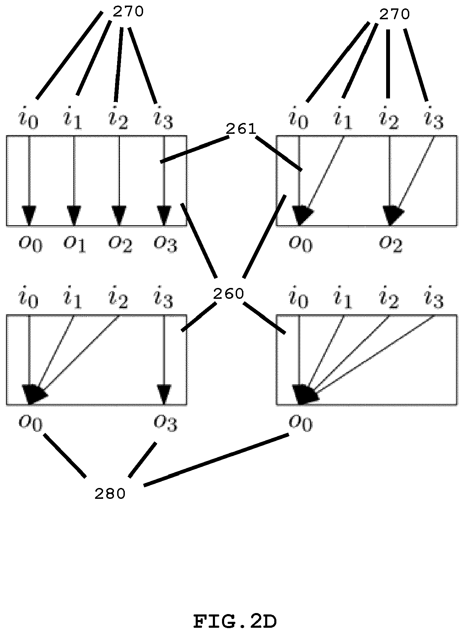

In FIG. 2D an exemplary embodiment is shown of possible configurations of the neuron switching circuit 260 in the column/neuron decoder 250 when four synapse columns 270 serve as input to the column/neuron decoder 250. In this example, the column/neuron decoder 250 is arranged to provide each group of four adjacent synapse columns 270 with four possible output neuron configurations 280 as shown, i.e. the four synapse columns may have their outputs selectively directed to four different sets of neurons 254 of the output block 202. The column/neuron decoder 250 can be connected with different numbers of synapse columns 270 and output neurons 254, and the number of synapse columns and output neurons can be different, and the number and arrangement of output neuron configurations 280 can be different.

The four configurations 280 of the neuron switching circuit 260 are discussed next. In a first configuration, the four synapse columns 270 serve as respective input to four output neurons via switching signal paths 261. In a second configuration, two pairs out of the four synapse columns 270 serve as input to two sets of output neurons via switching signal paths 261, i.e. synapse columns $i_0$ and $i_1$ serve output neuron $o_0$ and synapse columns $i_2$ and $i_3$ serve output neuron $o_2$. In a third configuration, three synapse columns $i_0$, $i_1$ and $i_2$ serve one output neuron set $o_0$, and the remaining synapse column $i_3$ serves output neuron $o_3$ via switching signal paths 261. In the fourth configuration, all four synapse columns serve a single output neuron set $o_0$ via switching signal paths 261.

The switching signal paths 261 may comprise conducting paths implemented in the logic circuit of the switching circuit 260, and they can be switched between different configurations in a particular implementation by e.g. configurable or fixed transistor gates. The particular connection of the switching signal paths 261 can be set at the initial manufacture of the neurosynaptic array, e.g. in the factory, and/or can be set on the fly via programming or other configuration of the column/neuron decoder 250 and/or neuron switching circuit 260. The neuron switching circuit 260 can e.g. reconfigure the switching signal paths 261 dynamically during operation of the neurosynaptic array. As mentioned, one or more select signals 251 can be used to select how the column/neuron decoder 250 switches from one set of neurons 254 to another set of neurons 254. The dynamic reconfiguration can be based on a certain mapping methodology incorporating a constraint driven partitioning and mapping of segments, of which exemplary embodiments will be described further below. For example, the dynamic reconfiguration can be done based on the signal-to-noise ratio $S/N$ of a particular segment in the neurosynaptic array. This will be explained further below.

The neuron switching circuit 260 thus determines which synapse columns 270 send outputs to which output neuron sets 280. In other words, the neuron switching circuit 260 thus implements - as a result of the currently active configuration of the neuron switching circuit 260 - a particular segmentation of the neurosynaptic array.

To support larger fan-in, the weight blocks $W_{n,n/m}$ can be organized as an interleaved structure to facilitate the switching/combining of $m$ adjacent synapse columns. The configuration for each set of $n/m$ neuron switches can be independently controlled for more mapping flexibility. For latency-sensitive routing of recurrent spikes or inter-layer connections, several options can be considered, for example offering a direct path between output neuron $i$ and selected inputs, utilizing interleaved organization of neuron groups or sets, such that an input can be quickly routed to any group, providing flexible injection of spikes into the array, where the neuron output can be broadcast to individual or multiple groups automatically.

Segmenting the array enables uniformity in terms of robustness and reliability of the performance, i.e. segmentation allows (i) a robust power distribution (vertical wide metal busses (for lower resistance) can be placed at the synapse row boundaries to alleviate IR drop concerns), (ii) if an interface for access to weight retention circuits requires a clock, segmentation creates hierarchy needed for a clock rebuffing strategy, (iii) segmentation improves signal integrity - instead of a single pre-synapse with large drive strength, segmentation allows for a distributed approach, since signals can be rebuffed/amplified after each segment, (iv) segmentation increases observability within the array and simplifies verification processes.

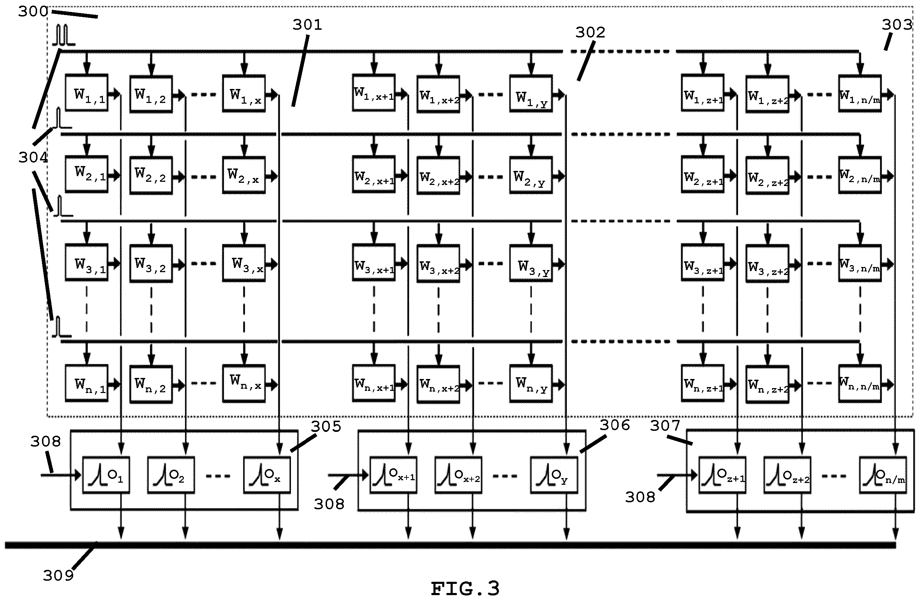

FIG. 3 schematically shows how to divide an exemplary reconfigurable array (as e.g. shown in FIG. 2) into multiple segments/subarrays.

A first subarray 301 comprises weight blocks $W_{ij}$ with $i \in [1, n]$ and $j \in [1, x]$. A second subarray 302 comprises weight blocks $W_{ij}$ with $i \in [1, n]$ and $j \in [x + 1, y]$. A final subarray 303 comprises weight blocks $W_{ij}$ with $i \in [1, n]$ and $j \in [z + 1, n/m]$. Here, x, $y$, z are natural numbers and $x \leq y \leq z \leq n/m$. More subarrays can exist. A number of $n$ input lines 304 feed the different weight blocks. Each of the weight blocks $w_{i,j}$ is connected to an output block $O_j$. Each subarray can comprise a number of output blocks segmented as output blocks 305, 306, 307 of subarrays 301, 302, 303 respectively. When the membrane potential of a particular neuron $N_j$ (which is

related to the neuron's membrane electrical charge) reaches a specific value, the neuron fires. This electrical signal is represented either as a voltage or current spike and is send to another part of the SNN via a spike out line 309.

Each of the output blocks can be controlled in that e.g. the accumulation period and/or the integration constant of a particular neuron(s) can be controlled via control signals 308. In this way, the reaction of the neurons to the signals from the weight blocks in the subarrays 301, 302, 303 can be controlled.

As mentioned before, the elementary operations required by an SNN are very efficiently realized by analog electronic circuitry, however, fabrication mismatch induces distortions in their functional properties. Especially at smaller process geometries, and lower operating currents, these circuits are increasingly susceptible to quantum effects and external noise, which effectively reduces signal-to-noise ratio and limits processing performance. The impact of these non-idealities is increased in the case of large arrays where the driver, biasing, and neurons and synapse are shared by a greater number of devices, over longer interconnects. Partitioning large arrays into smaller segments (subarrays), each with their own requisite circuitry, enables performance uniformity and mitigates these non-idealities if the mapping methodology incorporates a constraint driven partitioning and mapping of segments.

In an embodiment, the segments could be organized based on characteristics of the target signal processing function (for example gain, filtering, multiplication, addition), or frequency/time constants of operation.

In another embodiment, different regions/segments of the neurosynaptic array can be configured based on target application case, number of channels in pre-processing signal chain/path, frequency band of interest, complexity and characteristics of the feature set, or target signal-to-noise ratio of the system.

In another embodiment, segments could be organized based on biophysically/chemically-inspired definitions (for example spatio-temporal (long- and shortterm) evaluation, aging artifacts, brain communication costs and regions/layers).

In another embodiment, segments can be defined based on learning rule, learning rate and associated cost-based mechanism or (post-) plasticity mechanisms, or based on predefined Figure of Merit performance-based definitions.

In another embodiment, segments within neurosynaptic array could be configured based on homeostatic regulation (local and global) requirements, or error propagation/calibration capabilities and mechanism limitations, or limiting mechanism such as excitatory/inhibitory ratio, cross-talk, or network saturation mechanism.

FIGS. 4A-D schematically show an exemplary organization of the reconfigurable neuro-synaptic array 400: in FIG. 4A $n^2$ synapses 401 and $n$ neurons 402, in FIG. 4B dividing the array 400 in FIG. 4A into two segments, each with $n^2/2$ synapses and $2 \times n$ neurons, in FIG. 4C dividing an array 400 into four segments, each with $n^2/4$ synapses 401 and $4 \times n$ neurons 402, and in FIG. 4D dividing an array 400 into eight segments, each with $n^2/8$ synapses 401 and $8 \times n$ neurons 402.

The neurosynaptic segments can be composed of $n$ inputs driving $n^2$ synapses and $n$ neurons (as in FIG. 1-3, FIG. 4A). By reducing dendritic/array distances, complexes and compartments shorten delays and lower noise, i.e. to reduce power consumption and increase neuron count per synaptic connection for the same area, the array in FIG. 4A can be subdivided into two segments (FIG. 4B), each with $n^2/2$ synapses and $n$ neurons; hence, the total synaptic account across two segments remains the same, while the number of neurons doubles. Similarly, dividing the array in FIG. 4A into four segments (FIG. 4C), each with $n^2/4$ synapses can quadruple total neuron count, or into eight segments (FIG. 4D), each with $n^2/8$ synapses can increase neuron count by eight times, respectively.

An array's information capacity depends on signal (S) to noise (N) ratio $S/N$ and increases as $\log_2(1 + S/N)$. However, the energy cost of passing the signal through the array increases as $\sqrt{S/N}$. Thus, as $\sqrt{S/N}$ increases, the array's efficiency falls, i.e. all components try to transmit the same signal, although information per unit fixed cost rises. An optimum occurs where these two competing tendencies balance. Consequently, a higher ratio of fixed cost to signalling cost gives a larger optimum array.

The optimum array size also depends on the costs in other parts of the circuit in view of distributing allocated S/N among the components to maximize performance across the entire system.

FIG. 5 shows an exemplary representation of an organization of the reconfigurable neuro-synaptic array 500: each of the segments (subarrays) 501 can have a different synaptic count per neuron. On a segment 501 level, to benefit from increased accuracy of sensor outputs and/or increased discriminating feature selection and extraction capabilities, specialized segments, each devoted to processing a single modality, can be defined.

Each of the segments can have a different synaptic count per neuron, where $m = [1,.n]$, defined according to the description of this invention.

The $S/N$ of an input profoundly affects the array's optimum size since input noise imposes a boundary to be approached by the array's $S/N$. This reduces the efficacy of a large array at low input $S/N$ and the size of the most efficient array, i.e. because an input with low $S/N$ contains less information, and a smaller array has a lower information capacity, the optimum array matches its capacity to its input. The matching of array size to input $S/N$ follows the principle of symmorphosis, to match capacities within a system in order to obtain an optimal solution. See E.R. Weibel, "Symmorphosis: On form and function in shaping life," Cambridge, MA: Harvard University Press, 2000.

To economize on neuron numbers (but prevent one component from doing multiple tasks sub-optimally) within a segment, computation capabilities of circuit(s) within a neuron should be enhanced, i.e. devote more neuroreceptors (AMPA, NMDA, GABA) or neuron conductance-based (Na, Ca, K) definitions to the particular modality of the neuron and thus, improve the sensitivity and signal-to-noise ratio of the neurons. Such neurons could use internal (neuroreceptors or conductance-based) circuits to perform functions, which usually require a circuit of several neurons.

A neuromodulator can be broadcasted widely yet still act locally and specifically, affecting only neurons with an appropriate neuroreceptor. A neuromodulator's reach is further enhanced because its receptor diversifies into multiple subtypes that couple to different intra-segment signalling networks. Consequently, a small, targeted adjustment can retune and reconfigure a whole network, allowing efficient processing modularity, and task rescheduling if other signal processing functionality is required. Neuroreceptors alter the voltage dependence of currents, and subsequently affect the shape of the activation and inactivation curves.

Each receptor represents a multi-(trans)conductance channel, which models associated nonlinear characteristics. NMDA receptors can provide activity-dependent modifications of synaptic weight, while AMPA receptors can enable a fast synaptic current to drive the soma. Fast receptor modifications can act as a control mechanism for activity-dependent changes in synaptic efficacy. If groups of dendritic spikes (bursts) are sufficient to exceed the threshold of a particular neuron, the axon will generate action potentials; ensuing spike is fed-back into the dendrite, and together with soma signals multiplied and added to NMDA receptor signals to, subsequently, generate the weight control.

In general, the feedback signals can be a subset of those available and may act on a subset of the systems parameters (i.e. preserving specific intrinsic properties when perturbations are compensated). See T. O'Leary, A.H. Wiliams, A. France, E. Marder, "Cell types, network homeostasis, and pathological compensation from a biologically plausible ion channel expression model," Neuron, vol. 82, pp. 809-821, 2014.

When network perturbations occur, neuronal computational elements generate a spike based on the perturbation's sign, intensity and phase. If a resonance response of a neuronal cluster is distorted or altered, each neuron adjusts the phases of spiking. Subsequently, neuronal computation elements can perform time-dependent computations.

At sufficiently high levels of heterogeneity (e.g. increased heterogeneities in neurosynaptic parameters like integrator capacitance, firing threshold, refractory period), the network demonstrates a spatially disordered pattern of neural activity. If network activity profiles are narrow, the need for homogeneity in the distribution of spatial stimuli encoded by the network is increased.

FIG. 6A show an exemplary representation of a spiking neural processor 600 incorporating one or more data-to-spike encoders 606, multi-segmented analog/-mixed-signal neurosynaptic array 607, and spike decoders 611.

Data is used as input for input modules such as an AER 601, interfaces such as e.g. an SPI 602, I$^2$C 603 and/or I/O (input/output) 604 and/or a pre-processor DSP/CPU 605. The output of these input modules is send to one or more data-to-spike encoders 606. The one or more data-to-spike encoders 606 encode the data into spikes that are used as input for the analog/mixed-signal neurosynaptic array 607.

The spikes that are outputted by the neurosynaptic array 607 can be decoded by a spike decoder 611. A pattern lookup module 612 can be used to interpret particular patterns within the spike output signal. The decoded spikes can then be send to one or more output interfaces and/or interrupt logic 613. A configuration and control module 614 allows for configuration and control of the different parts of the spiking neural processor, e.g. setting weights and configuration parameters of the synaptic elements and neurons within the neurosynaptic array 607.

The neurosynaptic array 607 can be segmented according to any of the above mentioned embodiments. Neurons within a particular segment can conduct passively, as graded (analog) changes in electrical potential, and hence rely solely on analogue computations, which are direct and energy efficient. The brief, sharp, energy-intensive action potentials are reserved for larger-distance signalling, i.e. the interconnect within multi-segment analog/mixed-signal neurosynaptic array follows paradigm of the biological brain, i.e. dense connectivity in/between proximal segments, and less dense between distant segments. Thus, both long-range interconnects 610 and short-range interconnects 609 can exist between the neurons within the segmented neurosynaptic array 607.

FIG. 6B shows an exemplary representation of an interconnect structure.

Again the long-range interconnect 610 and short range interconnect 609 can be present between the different segments 608 within the neurosynaptic array 607.

Such (dual) interconnect structure is governed with distinctive design objectives: for short-range communication 609 low-latency between proximal segments is prioritized (obtained with high connection density), while with long-range communication 610 high-throughput between distant segments is targeted. Although the segment-to-segment interconnect fabric can be implemented with digital CMOS logic, the neurosynaptic arrays itself can be implemented by using for example analog/mixed-signal, digital, or non-volatile memory technologies.

In its simplest form, the neuron membrane potential can be implemented in the analog domain as a voltage across a capacitor or as a multibit variable stored in digital latches. Alternatively, digital neurons can be realized using CMOS logic circuits, such as adders, multipliers, and counters. From a circuit design point of view, the synapses modulate the input spikes and transform them into a charge that consequently creates postsynaptic currents that are integrated at the membrane capacitance of the postsynaptic neuron. The implementation of silicon synapses typically follows the mixed-signal methodology.

Spatiotemporal coordination of different types of synaptic transmission is fundamental for the inference of sensory signals and associated learning performance. For strong input the network organizes itself into a dynamic state where neural firing is primarily driven by the input fluctuations, resembling an asynchronous-irregular state, i.e. temporal and pairwise spike count cross-correlations approach zero. Heterosynaptic depression among all input synapses generates stable activity sequences within network.

The neurons generate time-locked patterns; due to the interaction between conductance delay (and plasticity rules), the network utilize a set of neuronal groups/segments, which form reproducible and precise firing sequences. As the conductance is increased (consequently, resulting in a net excitation to the network), the firing rates can increase and can become more uniform with a lower coefficient of variation. The network can generate spike-trains with regular timing relationships (inter-burst intervals and duty cycles) in different segments.

Entrainment of low-frequency synchronized behaviour includes a reorganization of phase so that the optimal, i.e. the most excitable, phase aligns with temporal characteristics of the events in ongoing input stimulus. The sequence of synaptic current (i.e. outward, inward) decreases temporal jitter in the generation of action potentials in individual neurons, and, consequently, creates a network with increased controllability of activity.

The large discrepancy in energy-efficiency and cognitive performance of biological nervous systems and conventional computing is profoundly exemplified with tasks related to real-time interactions with the physical surroundings, in particular in presence of uncontrolled or noisy sensory input. The neuromorphic event-based neuron network, however, due to ability to learn by example, parallelism of the operation, associative memory, multifactorial optimization, and extensibility, is an inherent choice for compact and low power cognitive systems that learn and adapt to the changes in the statistics of the complex sensory signals.

The present multi-segment reconfigurable architecture for the neuromorphic networks allows designs that offer energy-efficient solutions to applications ranging for detecting patterns of biomedical signals ( e.g. spike sorting, seizure detection, etc.), classifying images ( e.g. handwritten digits), speech commands, and can be applied in wide range of the devices, including smart sensors or wearable devices in cyber-physical systems and Internet-of-Things.

**Claims**

1. A neurosynaptic array (100) comprising a plurality of spiking neurons, and a plurality of synaptic elements interconnecting the spiking neurons to form a spiking neural network, wherein the synaptic elements and spiking neurons are partly or fully implemented in hardware;

   wherein each synaptic element is arranged to receive a synaptic input signal from at least one of a multiple of inputs and is adapted to apply a weight to the synaptic input signal to generate a synaptic output signal, the synaptic elements being configurable to adjust the weight applied by each synaptic element;
   wherein each of the spiking neurons is arranged to receive one or more of the synaptic output signals from one or more of the synaptic elements, and is adapted to generate a spatio-temporal spike train output signal in response to the received one or more synaptic output signals; and wherein
   the neurosynaptic array (100) comprises weight blocks (201) and output blocks (202), each weight block (201) comprising one or more of the synaptic elements, and each output block (202) comprising one or more of the neurons and a neuron switching circuit (260);
   wherein each weight block is comprised in a column of weight blocks of the neurosynaptic array;
   wherein each output block (202) is electrically connectable to a subset of weight blocks (201), the subset of weight blocks (201) formed by one or more columns of weight blocks, via the neuron switching circuit (260) by connecting an output of the one or more columns of weights blocks to one or more sets of neurons of the output block; and wherein the neuron switching circuit (260) is configured to selectively electrically connect at least one synaptic element comprised within the subset of weight blocks (201) to at least one neuron comprised within the respective output block (202), to obtain a partitioning of the neurosynaptic array (100) into sets of neurons electrically connected to selected synaptic elements.

2. The neurosynaptic array (100) of claim 1, wherein the synaptic elements comprised in a particular weight block (201) are provided within the same row of the neurosynaptic array (100) and/or wherein each output block (202) is connected to a column of weight blocks (201).

3. The neurosynaptic array (100) of claim 1 or 2, wherein each of the neuron switching circuits (260) comprises switching signal paths (261) which comprise conducting wires implemented in a logic circuit of the neuron switching circuit (260), wherein the switching signal paths (261) are configured to be switchable between different configurations, preferably by using transistor gates, wherein each configuration determines which at least one synaptic element comprised within the subset of weight blocks (201) is electrically connected to which at least one neuron comprised within the output block (202).

4. The neurosynaptic array (100) of claim 3, wherein the neuron switching circuit (260) is configured to reconfigure the switching signal paths (261) dynamically, wherein the dynamic reconfiguration is based on a mapping methodology incorporating a constraint driven partitioning and segmentation of the neurosynaptic array (100), wherein the neurosynaptic array (100) is partitioned and segmented into one or more segments, each segment having a signal (S) to noise (N) ratio S/N, an information capacity given by $\log_2 (1 + S/N)$ and an energy cost of passing a signal through the segment given by $\sqrt{S/N}$, in such a way that for each segment the information capacity is balanced with the energy cost of passing a signal through the segment.

5. The neurosynaptic array (100) of any one of the preceding claims, wherein the segmentation of the neurosynaptic array (100) is performed based on one or more learning rules, learning rates and/or (post-)plasticity mechanisms such that at least two of the neurosynaptic subarrays are distinct in terms of on the one or more learning rules, learning rates and/or (post-)plasticity mechanisms.

6. The neurosynaptic array (100) of any of the preceding claims, wherein at least one of the weight blocks (201) is organized as an interleaved structure, such as to facilitate the switching and/or combining of synaptic elements within the neurosynaptic array (100), and/or wherein for each output block (202) the switching is independently controllable, such as to obtain a higher mapping flexibility, and/or wherein at least one of the output blocks (202) are organized as an interleaved structure and/or wherein the neuron output of any of the output blocks (202) is broadcasted to one or multiple neurosynaptic subarrays.

7. The neurosynaptic array (100) of any one of the preceding claims, wherein each of the neurons within one of the output blocks (202) conducts passively as graded analog changes in electrical potential.

8. The neurosynaptic array (100) of any one of the preceding claims, wherein the neurosynaptic array (100) is segmented into neurosynaptic subarrays which are separable and have their own requisite circuity, and/or are arranged to process, and be optimized for, a single modality.

9. The neurosynaptic array (100) of claim 8, wherein both long-range and short-range interconnections exist between neurons of different neurosynaptic subarrays, and wherein denser connectivity exists in between proximal neurosynaptic subarrays than between more distant neurosynaptic subarrays.

10. The neurosynaptic array (100) of any one of the preceding claims, wherein at least one of the output blocks (202) is controllable in that the accumulation period and/or the integration constant of a particular neuron within the at least one of the output blocks (202) is controllable via control signals.

11. The neurosynaptic array (100) of any one of the preceding claims, wherein a neuron membrane potential of one of the neurons is implemented in the analog domain as a voltage across a capacitor or as a multibit variable stored in digital latches; or in the digital domain using CMOS logic circuits.

12. A spiking neural processor comprising:

a data-to-spike encoder that encodes digital or analog data into spikes;
a neurosynaptic array (100) according to any one of the preceding claims, arranged to take the spikes outputted by the data-to spike encoder as input and arranged to output a spatio-temporal spike train as a result of the input; and
a spike decoder arranged to decode the spatio-temporal spike trains originating from the neurosynaptic array (100).

13. A method for configuring a neurosynaptic array (100), wherein:

the neurosynaptic array (100) comprises a plurality of spiking neurons, and a plurality of synaptic elements interconnecting the spiking neurons to form a spiking neural network wherein the synaptic elements and spiking neurons are partly or fully implemented in hardware;
wherein each synaptic element is adapted to receive a synaptic input signal from at least one of a multiple of inputs and apply a weight to the synaptic input signal to generate a synaptic output signal, the synaptic elements being configurable to adjust the weight applied by each synaptic element;
wherein each of the spiking neurons is adapted to receive one or more of the synaptic output signals from one or more of the synaptic elements, and generate a spatio-temporal spike train output signal in response to the received one or more synaptic output signals; and
wherein the method comprises
dividing the neurosynaptic array (100) into weight blocks (201) and output blocks (202), each weight block (201) comprising one or more of the synaptic elements, and each output block (202) comprising one or more of the neurons and a neuron switching circuit (260),
wherein each weight block is comprised in a column of weight blocks of the neurosynaptic array;
making each output block (202) electrically connectable to a subset of weight blocks (201), the subset of weight blocks (201) formed by one or more columns of weight blocks, via the neuron switching circuit (260) by connecting an output of the one or more columns of weights blocks to one or more sets of neurons of the output block;
configuring the neuron switching circuit (260) to selectively electrically connect at least one synaptic element comprised within the subset of weight blocks (201) to at least one neuron comprised within the respective output block (202), to obtain a partitioning of the neurosynaptic array (100) into sets of neurons electrically connected to selected synaptic elements.

14. The method of claim 14, wherein the synaptic elements comprised in a particular weight block (201) are provided within the same row of the neurosynaptic array (100).

15. The method of claim 13 or 14, wherein each of the neuron switching circuits (260) comprises switching signal paths (261) which comprise conducting wires implemented in a logic circuit of the neuron switching circuit (260), wherein the switching signal paths (261) are configured to be switchable between different configurations, preferably by using transistor gates, wherein each configuration determines which at least one synaptic element comprised within the subset of weight blocks (201) is electrically connected to which at least one neuron comprised within the output block (202).

**Patentansprüche**

1. Neurosynaptisches Array (100), umfassend eine Vielzahl von Spiking-Neuronen und eine Vielzahl von synaptischen Elementen, die die Spiking-Neuronen miteinander verbinden, um ein Spiking-Neuronales-Netzwerk auszubilden, wobei die synaptischen Elemente und die Spiking-Neuronen teilweise oder vollständig in Hardware implementiert sind;

wobei jedes synaptische Element eingerichtet ist, um ein synaptisches Eingangssignal von mindestens einem von mehreren Eingängen zu empfangen, und angepasst ist, um eine Gewichtung auf das synaptische Eingangssignal anzuwenden, um ein synaptisches Ausgangssignal zu erzeugen, wobei die synaptischen Elemente konfigurierbar sind, um die Gewichtung anzupassen, die durch jedes synaptische Element angewendet wird;

wobei jedes der Spiking-Neuronen eingerichtet ist, um ein oder mehrere der synaptischen Ausgangssignale von einem oder mehreren der synaptischen Elemente zu empfangen, und eingerichtet ist, um als Reaktion auf die empfangenen einen oder mehreren synaptischen Ausgangssignale ein räumlich-zeitliches Spike-Folge-Ausgangssignal zu erzeugen;

und wobei das neurosynaptische Array (100) Gewichtungsblöcke (201) und Ausgangsblöcke (202) umfasst, jeder Gewichtungsblock (201) umfassend ein oder mehrere der synaptischen Elemente und jeder Ausgangsblock (202) umfassend ein oder mehrere der Neuronen und einen Neuronenschaltkreis (260);

wobei jeder Gewichtungsblock in einer Spalte von Gewichtungsblöcken des neurosynaptischen Arrays enthalten ist;

wobei jeder Ausgangsblock (202) mit einem Teilsatz von Gewichtungsblöcken (201) elektrisch verbindbar ist, wobei der Teilsatz von Gewichtungsblöcken (201) durch eine oder mehrere Spalten von Gewichtungsblöcken, mittels dem Neuronenschaltkreis (260) durch Verbinden eines Ausgangs der einen oder der mehreren Spalten von Gewichtungsblöcken mit einem oder mehreren Sätzen von Neuronen des Ausgangsblocks, ausgebildet wird; und wobei der Neuronenschaltkreis (260) konfiguriert ist, um selektiv mindestens ein synaptisches Element, das innerhalb des Teilsatzes von Gewichtungsblöcken (201) enthalten ist, mit mindestens einem Neuron, das innerhalb des jeweiligen Ausgangsblocks (202) enthalten ist, elektrisch zu verbinden, um eine Aufteilung des neurosynaptischen Arrays (100) in Sätze von Neuronen zu erhalten, die mit ausgewählten synaptischen Elementen elektrisch verbunden sind.

2. Neurosynaptisches Array (100) nach Anspruch 1, wobei die synaptischen Elemente, die in einem festgelegten Gewichtungsblock (201) enthalten sind, innerhalb der gleichen Reihe des neurosynaptischen Arrays (100) bereitgestellt sind und/oder wobei jeder Ausgangsblock (202) mit einer Spalte von Gewichtungsblöcken (201) verbunden ist.

3. Neurosynaptisches Array (100) nach Anspruch 1 oder 2, wobei jeder der Neuronenschaltkreise (260) Schaltsignalpfade (261) umfasst, die Leitungsdrähte umfassen, die in einem Logikschaltkreis des Neuronenschaltkreises (260) implementiert sind, wobei die Schaltsignalpfade (261) konfiguriert sind, um zwischen unterschiedlichen Konfigurationen schaltbar zu sein, vorzugsweise durch Verwenden von Transistorgattern, wobei jede Konfiguration bestimmt, welches mindestens eine synaptische Element, das innerhalb des Teilsatzes von Gewichtungsblöcken (201) enthalten ist, mit welchem mindestens einen Neuron elektrisch verbunden ist, das innerhalb des Ausgangsblocks (202) enthalten ist.

4. Neurosynaptisches Array (100) nach Anspruch 3, wobei der Neuronenschaltkreis (260) konfiguriert ist, um die Schaltsignalpfade (261) dynamisch neu zu konfigurieren, wobei die dynamische Neukonfiguration auf einer Abbildungsmethodik basiert, die eine durch Einschränkungen gesteuerte Partitionierung und Segmentierung des neurosynaptischen Arrays (100) miteinbezieht, wobei das neurosynaptische Array (100) in ein oder mehrere Segmente partitioniert und segmentiert ist, wobei jedes Segment ein Signal(S)-Rausch(R)-Verhältnis S/N, eine Informationskapazität, gegeben durch $\log_2 (1 + S/N)$ und einen Energieaufwand eines Übertragens eines Signals über das Segment aufweist, gegeben durch $\sqrt{S/N}$, auf eine Weise, dass für jedes Segment die Informationskapazität mit dem Energieaufwand des Übertragens des Signals über das Segment im Gleichgewicht steht.

5. Neurosynaptisches Array (100) nach einem der vorstehenden Ansprüche, wobei die Segmentierung des neurosynaptischen Arrays (100) basierend auf einer/m oder mehreren Lernregeln, Lernraten und/oder (Post-)Plastizitätsmechanismen derart durchgeführt wird, dass sich mindestens zwei der neurosynaptischen Unterarrays hinsichtlich der/m einen oder den mehreren Lernregeln, Lernraten und/oder (Post-)Plastizitätsmechanismen unterscheiden.

6. Neurosynaptisches Array (100) nach einem der vorstehenden Ansprüche, wobei mindestens einer der Gewichtungsblöcke (201) als eine verschachtelte Struktur organisiert ist, um das Schalten und/oder Kombinieren von synaptischen Elementen innerhalb des neurosynaptischen Arrays (100) zu erleichtern, und/oder wobei für jeden Ausgangsblock (202) das Schalten unabhängig steuerbar ist, um eine höhere Abbildungsflexibilität zu erreichen, und/oder wobei mindestens einer der Ausgangsblöcke (202) als eine verschachtelte Struktur organisiert ist und/oder wobei der Neuronenausgang eines beliebigen der Ausgangsblöcke (202) an ein oder mehrere neurosynaptische Unterarrays gesendet wird.

7. Neurosynaptisches Array (100) nach einem der vorstehenden Ansprüche, wobei jedes der Neuronen innerhalb eines der Ausgangsblöcke (202) als abgestufte analoge Änderungen des elektrischen Potenzials passiv leitet.

8. Neurosynaptisches Array (100) nach einem der vorstehenden Ansprüche, wobei das neurosynaptische Array (100) in neurosynaptische Unterarrays segmentiert ist, die trennbar sind und ihre eigenen erforderlichen Schaltkreise aufweisen und/oder eingerichtet sind, um eine einzige Modalität zu verarbeiten und für diese optimiert sind.

9. Neurosynaptisches Array (100) nach Anspruch 8, wobei zwischen Neuronen unterschiedlicher neurosynaptischer Unterarrays sowohl Fern- als auch Nahbereichsverbindungen bestehen und wobei zwischen proximalen neurosynaptischen Unterarrays eine dichtere Konnektivität als zwischen weiter entfernten neurosynaptischen Unterarrays besteht.

10. Neurosynaptisches Array (100) nach einem der vorstehenden Ansprüche, wobei mindestens einer der Ausgangsblöcke (202) dadurch steuerbar ist, dass die Akkumulationsperiode und/oder die Integrationskonstante eines festgelegten Neurons innerhalb des mindestens einen der Ausgangsblöcke (202) mittels Steuersignalen steuerbar ist.

11. Neurosynaptisches Array (100) nach einem der vorstehenden Ansprüche, wobei ein Neuronenmembranpotential eines der Neuronen in dem analogen Bereich als eine Spannung über einem Kondensator oder als eine Mehrbitvariable, die in digitalen Latches gespeichert ist; oder in dem digitalen Bereich unter Verwendung von CMOS-Logikschaltungen implementiert ist.

12. Spiking-Neural-Prozessor, umfassend:

ein Daten-Spike-Encoder, der digitale oder analoge Daten in Spikes codiert;
ein neurosynaptisches Array (100) nach einem der vorstehenden Ansprüche, das eingerichtet ist, um die Spikes, die durch den Daten-Spike-Encoder ausgegeben werden, als Eingang zu nehmen und eingerichtet ist, um als ein Ergebnis des Eingangs eine räumlichzeitliche Spike-Folge auszugeben; und

einen Spike-Decodierer, der eingerichtet ist, um die räumlich-zeitlichen Spike-Folgen zu decodieren, die aus dem neurosynaptischen Array (100) stammen.

13. Verfahren zum Konfigurieren eines neurosynaptischen Arrays (100), wobei:

das neurosynaptische Array (100) eine Vielzahl von Spiking-Neuronen und eine Vielzahl von synaptischen Elementen umfasst, die die Spiking-Neuronen miteinander verbinden, um ein Spiking-Neuronales-Netzwerk auszubilden, wobei die synaptischen Elemente und die Spiking-Neuronen teilweise oder vollständig in Hardware implementiert sind;
wobei jedes synaptische Element eingerichtet ist, um ein synaptisches Eingangssignal von mindestens einem von mehreren Eingängen zu empfangen und eine Gewichtung auf das synaptische Eingangssignal anzuwenden, um ein synaptisches Ausgangssignal zu erzeugen, wobei die synaptischen Elemente konfigurierbar sind, um die Gewichtung anzupassen, die durch jedes synaptische Element angewendet wird;
wobei jedes der Spiking-Neuronen eingerichtet ist, um ein oder mehrere der synaptischen Ausgangssignale von einem oder mehreren der synaptischen Elemente zu empfangen und als Reaktion auf die empfangenen einen oder mehreren synaptischen Ausgangssignale ein räumlich-zeitliches Spike-Folge-Ausgangssignal zu erzeugen; und
wobei das Verfahren umfasst
Teilen des neurosynaptischen Arrays (100) in Gewichtungsblöcke (201) und Ausgangsblöcke (202), jeder Gewichtungsblock (201) umfassend ein oder mehrere der synaptischen Elemente und jeder Ausgangsblock (202) umfassend ein oder mehrere der Neuronen und einen Neuronenschaltkreis (260),
wobei jeder Gewichtungsblock in einer Spalte von Gewichtungsblöcken des neurosynaptischen Arrays enthalten ist;
Machen jedes Ausgangsblocks (202) elektrisch verbindbar mit einem Teilsatz von Gewichtungsblöcken (201), wobei der Teilsatz von Gewichtungsblöcken (201) durch eine oder mehrere Spalten von Gewichtungsblöcken, mittels dem Neuronenschaltkreis (260) durch Verbinden eines Ausgangs der einen oder der mehreren Spalten von Gewichtungsblöcken mit einem oder mehreren Sätzen von Neuronen des Ausgangsblocks, ausgebildet ist;
Konfigurieren des Neuronenschaltkreises (260), um selektiv mindestens ein synaptisches Element, das in dem Teilsatz von Gewichtungsblöcken (201) enthalten ist, mit mindestens einem Neuron elektrisch zu verbinden, das innerhalb des jeweiligen Ausgangsblock (202) enthalten ist, um eine Aufteilung des neurosynaptischen Arrays (100) in Sätzen von Neuronen zu erhalten, die mit ausgewählten synaptischen Elementen elektrisch verbunden sind.

14. Verfahren nach Anspruch 14, wobei die synaptischen Elemente, die in einem festgelegten Gewichtungsblock (201) enthalten sind, innerhalb der gleichen Zeile des neurosynaptischen Arrays (100) bereitgestellt werden.

15. Verfahren nach Anspruch 13 oder 14, wobei jeder der Neuronenschaltkreise (260) Schaltsignalpfade (261) umfasst, die Leitungsdrähte umfassen, die in einem Logikschaltkreis des Neuronenschaltkreises (260) implementiert sind, wobei die Schaltsignalpfade (261) konfiguriert sind, um zwischen unterschiedlichen Konfigurationen schaltbar zu sein, vorzugsweise durch Verwenden von Transistorgattern, wobei jede Konfiguration bestimmt, welches mindestens eine synaptische Element, das innerhalb des Teilsatzes von Gewichtungsblöcken (201) enthalten ist, mit welchem mindestens einen Neuron elektrisch verbunden ist, das innerhalb des Ausgangsblocks (202) enthalten ist.

## Revendications

1. Réseau neurosynaptique (100) comprenant une pluralité de neurones impulsionnels et une pluralité d'éléments synaptiques interconnectant les neurones impulsionnels pour former un réseau neuronal impulsionnel, dans lequel les éléments synaptiques et les neurones impulsionnels sont partiellement ou entièrement implémentés dans un matériel ;

dans lequel chaque élément synaptique est agencé pour recevoir un signal d'entrée synaptique à partir d'au moins l'une parmi de multiples entrées et est adapté pour appliquer un poids au signal d'entrée synaptique afin de générer un signal de sortie synaptique, les éléments synaptiques étant configurables pour ajuster le poids appliqué par chaque élément synaptique ;
dans lequel chacun des neurones impulsionnels est agencé pour recevoir un ou plusieurs signaux de sortie synaptiques à partir d'un ou plusieurs parmi les éléments synaptiques, et est adapté pour générer un signal de sortie de train d'impulsions spatio-temporel en réponse au ou aux signaux de sortie synaptiques reçus ;
et dans lequel le réseau neurosynaptique (100) comprend des blocs de poids (201) et des blocs de sortie (202), chaque bloc de poids (201) comprenant un ou plusieurs parmi les éléments synaptiques, et chaque bloc de sortie (202) comprenant un ou plusieurs parmi les neurones et un circuit de commutation de neurones (260) ;
dans lequel chaque bloc de poids est compris dans une colonne de blocs de poids du réseau neurosynaptique ;
dans lequel chaque bloc de sortie (202) peut être électriquement connecté à un sous-ensemble de blocs de poids (201), le sous-ensemble de blocs de poids (201) étant formé par une ou plusieurs colonnes de blocs de poids, par l'intermédiaire du circuit de commutation de neurones (260) en connectant une sortie de la ou des colonnes de blocs de poids à un ou plusieurs ensembles de neurones du bloc de sortie ; et dans lequel le circuit de commutation de neurones (260) est configuré pour connecter électriquement de manière sélective au moins un élément synaptique compris à l'intérieur du sous-ensemble de blocs de poids (201) à au moins un neurone compris à l'intérieur du bloc de sortie (202) respectif, afin d'obtenir un partitionnement du réseau neurosynaptique (100) en ensembles de neurones connectés électriquement à des éléments synaptiques sélectionnés.

2. Réseau neurosynaptique (100) selon la revendication 1, dans lequel les éléments synaptiques compris dans un bloc de poids (201) particulier sont fournis à l'intérieur de la même rangée du réseau neurosynaptique (100) et/ou dans lequel chaque bloc de sortie (202) est connecté à une colonne de blocs de poids (201).

3. Réseau neurosynaptique (100) selon la revendication 1 ou 2, dans lequel chacun des circuits de commutation de neurones (260) comprend des parcours de signaux de commutation (261) qui comprennent des fils conducteurs implémentés dans un circuit logique du circuit de commutation de neurones (260), dans lequel les parcours de signaux de commutation (261) sont configurés pour être commutés entre différentes configurations, de préférence en utilisant des portes de transistor, dans lequel chaque configuration détermine quel au moins un élément synaptique compris à l'intérieur du sous-ensemble de blocs de poids (201) est électriquement connecté à quel au moins un neurone compris à l'intérieur du bloc de sortie (202).

4. Réseau neurosynaptique (100) selon la revendication 3, dans lequel le circuit de commutation de neurones (260) est configuré pour reconfigurer dynamiquement les parcours de signaux de commutation (261), dans lequel la reconfiguration dynamique est basée sur une méthodologie de mappage incorporant un partitionnement et une segmentation du réseau neurosynaptique (100) entraînés par des contraintes, dans lequel le réseau neurosynaptique (100) est partitionné et segmenté en un ou plusieurs segments, chaque segment ayant un rapport signal (S) sur bruit (N) S/N, une capacité informationnelle donnée par $\log_2(1 + S/N)$ et un coût énergétique pour le passage d'un signal à travers le segment donné par $\sqrt{S/N}$, de telle sorte que, pour chaque segment, la capacité informationnelle est équilibrée par le coût énergétique du passage d'un signal à travers le segment.

5. Réseau neurosynaptique (100) selon l'une quelconque des revendications précédentes, dans lequel la segmentation du réseau neurosynaptique (100) est effectuée sur la base d'une ou plusieurs règles d'apprentissage, d'un ou plusieurs taux d'apprentissage et/ou d'un ou plusieurs mécanismes de (post-)plasticité de sorte qu'au moins deux des sous-réseaux neurosynaptiques sont distincts en termes de la ou des règles d'apprentissage, du ou des taux d'apprentissage et/ou du ou des mécanismes de (post-)plasticité.

6. Réseau neurosynaptique (100) selon l'une quelconque des revendications précédentes, dans lequel au moins l'un parmi les blocs de poids (201) est organisé comme une structure entrelacée, de manière à faciliter la commutation et/ou la combinaison d'éléments synaptiques à l'intérieur du réseau neurosynaptique (100), et/ou dans lequel, pour chaque bloc de sortie (202), la commutation peut être commandée de manière indépendante, de manière à obtenir une plus grande souplesse de mappage, et/ou dans lequel au moins l'un parmi les blocs de sortie (202) est organisé comme une structure entrelacée et/ou dans lequel la sortie de neurone d'un quelconque bloc de sortie (202) est diffusée à un ou plusieurs sous-réseaux neurosynaptiques.

7. Réseau neurosynaptique (100) selon l'une quelconque des revendications précédentes, dans lequel chacun des neurones à l'intérieur de l'un des blocs de sortie (202) conduit passivement sous forme de changements analogiques gradués du potentiel électrique.

8. Réseau neurosynaptique (100) selon l'une quelconque des revendications précédentes, dans lequel le réseau neurosynaptique (100) est segmenté en sous-réseaux neurosynaptiques qui sont séparables et ont leurs propres circuits requis, et/ou sont agencés pour traiter, et être optimisés pour, une seule modalité.

9. Réseau neurosynaptique (100) selon la revendication 8, dans lequel des interconnexions à longue distance et à courte distance existent entre des neurones de différents sous-réseaux neurosynaptiques, et dans lequel une connectivité plus dense existe entre les sous-réseaux neurosynaptiques proximaux qu'entre les sous-réseaux neurosynaptiques plus éloignés.

10. Réseau neurosynaptique (100) selon l'une quelconque des revendications précédentes, dans lequel au moins l'un parmi les blocs de sortie (202) peut être commandé en ce sens que la période d'accumulation et/ou la constante d'intégration d'un neurone particulier à l'intérieur de l'au moins l'un parmi les blocs de sortie (202) peut être commandée par des signaux de commande.

11. Réseau neurosynaptique (100) selon l'une quelconque des revendications précédentes, dans lequel un potentiel de membrane neuronal de l'un des neurones est implémenté dans le domaine analogique sous la forme d'une tension à travers un condensateur ou d'une variable multibits stockée dans des verrous numériques ; ou dans le domaine numérique à l'aide de circuits logiques CMOS.

12. Processeur neuronal impulsionnel comprenant :

un codeur de données en impulsions qui code des données numériques ou analogiques en impulsions ;
un réseau neurosynaptique (100) selon l'une quelconque des revendications précédentes, agencé pour prendre les impulsions émises en sortie par le codeur de données en impulsions comme entrée et agencé pour émettre en sortie un train d'impulsions spatio-temporel comme résultat de l'entrée ; et
un décodeur d'impulsions agencé pour décoder les trains d'impulsions spatio-temporels provenant du réseau neurosynaptique (100).

13. Procédé de configuration d'un réseau neurosynaptique (100), dans lequel :

le réseau neurosynaptique (100) comprend une pluralité de neurones impulsionnels et une pluralité d'éléments synaptiques interconnectant les neurones impulsionnels pour former un réseau neuronal impulsionnel dans lequel les éléments synaptiques et les neurones impulsionnels sont partiellement ou entièrement implémentés dans un matériel ;
dans lequel chaque élément synaptique est adapté pour recevoir un signal d'entrée synaptique à partir d'au moins l'une parmi de multiples entrées et appliquer un poids au signal d'entrée synaptique pour générer un signal de sortie synaptique, les éléments synaptiques étant configurables pour ajuster le poids appliqué par chaque élément synaptique ;

dans lequel chacun des neurones impulsionnels est adapté pour recevoir un ou plusieurs signaux de sortie synaptiques d'un ou plusieurs éléments synaptiques et pour générer un signal de sortie de train de pointes spatio-temporel en réponse à un ou plusieurs signaux de sortie synaptiques reçus ; et

dans lequel le procédé comprend

la division du réseau neurosynaptique (100) en blocs de poids (201) et blocs de sortie (202), chaque bloc de poids (201) comprenant un ou plusieurs parmi les éléments synaptiques, et chaque bloc de sortie (202) comprenant un ou plusieurs parmi les neurones et un circuit de commutation de neurones (260),

dans lequel chaque bloc de poids est compris dans une colonne de blocs de poids du réseau neurosynaptique ;

le fait de rendre chaque bloc de sortie (202) capable de se connecter électriquement à un sous-ensemble de blocs de poids (201), le sous-ensemble de blocs de poids (201) étant formé par une ou plusieurs colonnes de blocs de poids, par l'intermédiaire du circuit de commutation de neurones (260) en connectant une sortie de la ou des colonnes de blocs de poids à un ou plusieurs ensembles de neurones du bloc de sortie ;

la configuration du circuit de commutation de neurones (260) pour connecter électriquement de manière sélective au moins un élément synaptique compris à l'intérieur du sous-ensemble de blocs de poids (201) à au moins un neurone compris à l'intérieur du bloc de sortie (202) respectif, afin d'obtenir un partitionnement du réseau neurosynaptique (100) en ensembles de neurones connectés électriquement à des éléments synaptiques sélectionnés.

**14.** Procédé selon la revendication 14, dans lequel les éléments synaptiques compris dans un bloc de poids (201) particulier sont fournis à l'intérieur de la même rangée du réseau neurosynaptique (100).

**15.** Procédé selon la revendication 13 ou 14, dans lequel chacun des circuits de commutation de neurones (260) comprend des parcours de signaux de commutation (261) qui comprennent des fils conducteurs implémentés dans un circuit logique du circuit de commutation de neurones (260), dans lequel les parcours de signaux de commutation (261) sont configurés pour être commutables entre différentes configurations, de préférence en utilisant des portes de transistor, dans lequel chaque configuration détermine quel au moins un élément synaptique compris à l'intérieur du sous-ensemble de blocs de poids (201) est électriquement connecté à quel au moins un neurone compris à l'intérieur du bloc de sortie (202).

FIG.1

FIG.2

EP 4 323 923 B1

FIG.2D

FIG. 3

FIG.4

EP 4 323 923 B1

FIG.5

FIG. 6A

FIG.6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020099680 A2
- US 2012317062 A1
- US 2019303740 A1
- US 63107498 B

**Non-patent literature cited in the description**

- **M.J.M. PELGROM** ; **A.C.J. DUINMAIJER** ; **A.P.G. WELBERS**. Matching properties of MOS transistors. *IEEE Journal of Solid-State Circuits*, 1989, vol. 24 (5), 1433-1439
- **K.L. SHEPARD** ; **V. NARAYANAN**. Noise in deep submicron digital design. *IEEE International Conference on Computer-Aided Design*, 1997, 524-531
- **E.R. WEIBEL**. Symmorphosis: On form and function in shaping life. Harvard University Press, 2000
- **T. O'LEARY** ; **A.H. WILIAMS** ; **A. FRANCE** ; **E. MARDER**. Cell types, network homeostasis, and pathological compensation from a biologically plausible ion channel expression model,''. *Neuron*, 2014, vol. 82, 809-821